# EUROPÄISCHE PATENTANMELDUNG

(11) **EP 1 136 964 A2**
(43) Veröffentlichungstag der Anmeldung: **26.09.2001**
(21) Anmeldenummer: 01100198.9
(22) Anmeldetag: 18.01.2001
(51) Int. Cl.: G08B 13/196

(54) **Video-Überwachungsgerät mit einer Dome-Kamera und einem Schutzgehäuse**

(30) Priorität: 20.03.2000 DE 10013780
(71) Anmelder: VIDEOR TECHNICAL E. HARTIG GMBH, 63319 Rödermark (DE)
(72) Erfinder: Bernhardt, Rainer, 61191 Rosbach v.d.H. (DE)
(74) Vertreter: Zapfe, Hans, Dipl.-Ing.

(57) **Zusammenfassung**

Bei einer Video-überwachungsgerät mit
a) einer Dome-Kamera (14) mit einem Gehäuse (15) und einer ersten Kuppel (16), in der eine Video-Kamera mit einem Objektiv (18) angeordnet ist, das um eine vertikale Drehachse (A-A) und eine horizontale Schwenkachse verstellbar ist, mit
b) einer Platinenanordnung (6) mit elektrischen Bauteilen und einer Halterung für die Dome-Kamera (14), wobei zwischen der Platinenanordnung (6) und der Dome-Kamera (14) eine erste Trennebene (E1-E1) angeordnet ist, und mit
c) einem Schutzgehäuse (19), das die Platinenanordnung (6) und die Dome-Kamera (14) umgibt und das im Bereich der ersten Kuppel (16) eine zweite Kuppel (21) besitzt,
wird zur Verbesserung der Zugänglichkeit elektrischer Bauteile und Komponenten, des Umrüstens, des Herstellens und Lösens mechanischer und elektrischer Verbindungen wie Schraub-, Steck- und Lötverbindungen der Aufbau so gestaltet, daß
d) die Platinenanordnung (6) an der Unterseite eines Tragflansches (3) und unterhalb von dessen Außenrand angeordnet ist und daß
e) die zweite Kuppel (21) in Richtung der Drehachse (A-A) nach oben durch einen Gehäusemantel (20) verlängert ist, der die Platinenanordnung (6) umgreift und einen oberen Rand aufweist, der lösbar mit dem Tragflansch (3) verbunden ist, wobei an der Verbindungsstelle eine zweite Trennebene (E2-E2) gebildet ist, die oberhalb der ersten Trennebene (E1-E1) liegt.

## Beschreibung

Die Erfindung betriff ein Video-überwachungsgerät mit
a) einer Dome-Kamera mit einem Gehäuse und einer mindestens teilweise strahlungsdurchlässigen ersten Kuppel, in der eine Video--Kamera mit einem Objektiv angeordnet ist, dessen optische Achse um eine vertikale Drehachse und eine horizontale Schwenkachse verstellbar ist, mit
b) einer Platinenanordnung mit elektrischen Bauteilen und einer Halterung für die Dome-Kamera, wobei zwischen der Platinenanordnung und der Dome-Kamera eine erste Trennebene angeordnet ist, und mit
c) einem Schutzgehäuse, das die Platinenanordnung und die Dome--Kamera umgibt und das im Bereich der ersten Kuppel eine zweite strahlungsdurchlässige Kuppel besitzt.

Bei diesen und den nachstehend beschriebenen Dome-Kameras handelt es sich um Serienprodukte mehrerer Hersteller. In einem etwa zylindrischen Gehäuse sind Leitungen und elektronische Bauelemente für eine Videokamera angeordnet, deren optische Achse - die Achse des Objektivs - derart um eine vertikale und eine horizontale Achse drehbar bzw. schwenkbar ist, daß durch überlagerung der Bewegungen alle Raumkoordinaten unterhalb des Gehäuses mit der optischen Achse des Kamera-Objektivs erreicht werden können. Der Schwenkbereich des Kamera-Objektivs kann von einer etwa halbkugelförmigen, für sichtbares Licht und/oder Infrarotstrahlung mindestens teilweise durchlässigen Kuppel umgeben sein, die auch als "Dome" bezeichnet wird, woher die Kamera ihren Namen hat. Die Außendurchmesser von Gehäuse und Kuppel sind annähernd gleich. Eine Einstellung der optischen Achse und des Bildwinkels kann dabei von Hand vorgenommen werden. Es ist aber auch möglich, die Raumlage der optischen Achse und den Bildwinkel eines Zoomobjektivs ferngesteuert zu verändern und sogar bei einer automatischen Zielverfolgung eine Nachführung zu erreichen. Für diesen Zweck sind im Gehäuse elektrische Antriebsmotoren und deren Steuerelemente für die Video-Kamera angeordnet.

Für bestimmte Anwendungsfälle, z.B. im Freien, müssen solche Dome--Kameras in einem Schutzgehäuse untergebracht werden können, das die Funktion der Dome-Kamera nicht beeinträchtig und dies vor Witterungseinflüssen und Sabotageakten schützt. Bereits für minimale Anforderungen werden mindestens sechs elektrische Verbindungen benötigt, die alle von Hand hergestellt werden müssen, was auch durch eine Steckverbindung geschehen kann.

Durch einen Prospekt der Fa. VIDEOLARM/USA aus 1996 ist es bekannt, ein Schutzgehäuse für eine Dome-Kamera eines Video-überwachungsgeräts aus zwei unterschiedlich großen Halbkugelschalen zusammenzusetzen, die in ihren Äquatorialebenen nach unten hin durch einen breiten Kreisring verbunden und verschlossen sind. Der Innendurchmesser dieses Kreisrings und der unteren, transparenten Halbkugelschale ist aber mehr als zwei Mal so groß wie der Außendurchmesser der Dome-Kamera, deren Gehäuse weit nach oben in die obere Halbkugelschale hineinragt. Diese Durchmesser-Differenz ist erforderlich, damit ein Monteur nach dem Abnehmen der unteren Halbkugelschale mit den Fingern und Werkzeugen durch den breiten Ringspalt in die obere Halbkugelschale hineingreifen kann, wo sich die elektrischen und mechanischen Anschlußelemente für die Dome-Kamera befinden. Die Folge ist ein Außendurchmesser der oberen, größeren Halbkugelschale von etwa 46 cm, die in einer entsprechend großen gabelförmigen Haltevorrichtung befestigt werden muß.

Ähnliche Systeme, bei denen zur Montage und Demontage schwierige Manipulationen zwischen der Dome-Kamera und einem großvolumigen Schutzgehäuse von unten her erforderlich sind, werden auch in Prospekten der Fa. VICON Industries Ltd. in Großbritannien angeboten.

Durch einen Prospekt der Fa. Sensormatic Electronics Corporation aus 1998 ist es bekannt, das Gehäuse einer Dome-Kamera auf der Oberseite mit einer teuren Bajonettfassung und einer Vielzahl von elektrischen Gleitkontakten zu versehen, die in eine kompatible Fassung eines Schutzgehäuses eingesetzt werden. Anschließend wird an der Unterseite des Schutzgehäuses eine zweite transparente Kuppel - auch "Bubble" genannt - befestigt. Dadurch entfallen zwar Manipulationen in dem Ringraum zwischen der Dome-Kamera und dem Schutzgehäuse, jedoch setzt diese Lösung ein speziell angepaßtes, kompatibles und teures Schutzgehäuse voraus, das immer noch wesentlich größer ist als die Dome-Kamera selbst und nicht universell eingesetzt werden kann.

Durch die US 3 819 856 ist ein Schutzgehäuse für Video-überwachungsgeräte bekannt, bei dem am unteren Ende eines kegelstumpfförmigen Basisgehäuses mittels eines Scharniers eine transparente Halbkugelschale angeordnet ist, und zwar etwa in der Äquatorialebene der Halbkugel, deren Durchmesser der kleineren Basisfläche des Kegelstumpfes entspricht. Das Basisgehäuse ist mit seiner größeren Basisfläche fest mit einer Tragscheibe verbunden, die zur Deckenmontage des Geräts dient. Die Anordnung von Platinen für die Verdrahtung des aus der Raumdecke kommenden vieladrigen Zuführungskabels und Einzelheiten dieser Verdrahtung sind nicht offenbart. Die Deckenbefestigung, die Verdrahtung und die Lösung der Verdrahtung sind nur bei zerlegtem Gerät und ausgebauter Kamera möglich. Wegen des engen Ringspalts zwischen dem drehbaren Kameraträger und dem Basisgehäuse in der besagten Äquatorialebene wären bereits die Deckenbefestigung, die Herstellung und die Lösung der Verdrahtung bei eingebauter Kamera schwierig durchzuführen. Der kegelstumpfförmige Mantel des Basisgehäuses kann nicht von der Tragscheibe getrennt werden. Die einzige Trennfuge in der Äuatorialebene liegt für eine leichte Zugänglichkeit des Gehäuseinneren einfach zu tief.

Durch die EP 0 642 053 A1 sind Schutzgehäuse für Video-überwachungsgeräte bekannt, die aus einer undurchsichtigen oberen Halbkugelschale für die Deckenbefestigung und aus einer transparenten unteren Kuppel besteht, die knapp halbkugelförmig ausgebildet ist. Die Verbindung erfolgt in der Äquatorialebene der oberen Halbkugelschale. Wegen der Ausbildung eines Kreislaufs von Heizungsluft enthält die obere Halbkugelschale zwei weitere konzentrische Kugelschalensegmente, die ebenso wie ein etwa U-förmiger Kameraträger nach der Deckenbefestigung der oberen Halbkugelschale in dieser montiert werden müssen, wobei eine als Tragplatte ausgebildete Platine, die zwei Gebläse mit Heizungen und einen Teil der aus der Raumdecke kommenden vieladrigen Verdrahtung trägt, zwischen der oberen Halbkugelschale und den beiden Kugelschalensegmenten zu liegen kommt. Für diese Art der Befestigung ist eine Vielzahl von Schrauben vorgesehen, die alle gelöst und wieder angezogen werden müssen, wenn an der Verdrahtung etwas geändert und/oder eine Inspektion durchgeführt werden soll. Die Deckenbefestigung, die Verdrahtung und die Lösung der Verdrahtung sind gleichfalls nur bei zerlegtem Gerät und ausgebauter Kamera möglich. Die einzige Trennfuge in der besagten Äuatorialebene liegt für einen seitlichen Zugang zur Platine bei montiertem Gerät gleichfalls viel zu tief. Auch befaßt sich diese Schrift gleichfalls nicht mit diesen Problemen.

Der Erfindung liegt daher die Aufgabe zugrunde, eine Kombination einer Dome-Kamera und eines Schutzgehäuses anzugeben, bei der keine schwierigen Manipulationen erforderlich sind, die kostengünstig herstellbar ist und bei der das Schutzgehäuse die Dome-Kamera möglichst eng und voll abgedichtet umschließt. Insbesondere sollen herkömmliche Dome-Kameras unterschiedlicher Hersteller in ein nicht speziell angepaßtes, sondern universell verwendbares Schutzgehäuse einsetzbar und zuverlässig gegen Witterungseinflüsse und Sabotage geschützt sein.

Die Lösung der gestellten Aufgabe erfolgt dabei erfindungemäß dadurch, daß
d) die Platinenanordnung an der Unterseite eines Tragflansches und zumindest im wesentlichen unterhalb von dessen Außenrand angeordnet ist,
e) die zweite Kuppel in Richtung der Drehachse nach oben durch einen Gehäusemantel verlängert ist, der die Platinenanordnung umgreift und einen oberen Rand aufweist, der lösbar mit dem Tragflansch verbunden ist, wobei an der Verbindungsstelle eine zweite Trennebene gebildet ist, die oberhalb der ersten Trennebene liegt.

Mit der Erfindung wird die gestellte Aufgabe in vollem Umfange gelöst, d.h., es wird eine Kombination einer Dome-Kamera und eines Schutzgehäuses angegeben, bei der beim Herstellen und Lösen mechanischer und elektrischer Verbindungen keine schwierigen Manipulationen erforderlich sind, die kostengünstig herstellbar ist und bei der das Schutzgehäuse die Dome-Kamera möglichst eng und voll abgedichtet umschließt. Insbesondere sollen herkömmliche Dome-Kameras unterschiedlicher Hersteller in ein nicht speziell angepaßtes, sondern universell verwendbares Schutzgehäuse einsetzbar und zuverlässig gegen Umwelteinflüsse und Sabotage geschützt sein. Nach dem Lösen und Abziehen des Schutzgehäuses nach unten sind zumindest alle wesentlichen mechanischen und elektrischen Verbindungen voll sichtbar und für den Eingriff von Werkzeugen zugänglich.

Es ist dabei besonders vorteilhaft, wenn im Zuge weiterer Ausgestaltungen der Erfindung - entweder einzeln oder in Kombination - :
* im Gehäuse ein Drehantrieb und ein Schwenkantrieb für die ferngesteuerte Bewegung der optischen Achse des Objektivs angeordnet sind,
* der Tragflansch eine koaxiale Fläche aufweist, auf die der obere Rand des Gehäusemantels aufsetzbar ist,
* der Tragflansch im wesentlichen scheibenförmig ausgebildet ist und ein Halterohr mit dem Gehäusemantel des Schutzgehäuses verbindet,
* an der Unterseite des Tragflansches über mindestens einen Satz von Distanzelementen mindestens eine Tragplatte angeordnet ist, an der die Dome-Kamera befestigt ist, wobei die erste Trennebene zwischen der Tragplatte und der Dome-Kamera angeordnet ist,
* zwischen dem Tragflansch und der Tragplatte eine Zwischenplatte angeordnet ist, wobei die Zwischenplatte über einen ersten Satz von Distanzelementen mit dem Tragflansch und die Tragplatte über einen zweiten Satz von Distanzelementen mit der Zwischenplatte verbunden ist,
* die Platinenanordnung als Baugruppe abnehmbar am Tragflansch befestigt ist,
* die Platinenanordnung mittels schlüssellochförmiger Ausnehmungen an den Distanzelementen des Tragflansches befestigt ist,
* an dem Tragflansch ein Heizelement und an der Zwischenplatte ein Gebläse für die Umwälzung der aufgeheizten Innenatmosphäre des Schutzgehäuses angeordnet ist,
* an dem Tragflansch ein Heizelement und an der Tragplatte ein Gebläse für die Umwälzung der aufgeheizten Innenatmosphäre des Schutzgehäuses angeordnet ist,
* der Gehäusemantel an seiner Unterseite einen Ring besitzt und wenn die zweite Kuppel einen nach außen umgelegten Rand besitzt, der unter Zwischenschaltung einer Dichtung durch einen Sprengring gegen den Ring festgelegt ist,
* der Gehäusemantel von einem weiteren Mantel umgeben ist,
* über dem Tragflansch ein nach oben abnehmbares Schutzdach angeordnet ist, dessen Außenrand den oberen Rand des Schutzgehäuses übergreift,
* der Gehäusemantel des Schutzgehäuses als Hohlzylinder ausgebildet ist,
* die Länge des Gehäusemantels mindestens das 0,5-Fache, insbesondere das 0,8-Fache, seines Außendurchmessers beträgt,
* die äußere Kuppel aus einer Teilkugelschale besteht, von deren Rand in Richtung auf den Gehäusemantel ein hohlzylindrischer Fortsatz gleichen Durchmessers wie der des Randes ausgeht und/oder, wenn
* die äußere Kuppel aus einer Halbkugelschale und aus einem hohlzylindrischen Fortsatz gleichen Durchmessers besteht.

Weitere zusätzliche Vorteile sind in der nachfolgenden Detailbeschreibung angegeben.

Zwei Ausführungsbeispiele des Erfindungsgegenstandes und seine Einzelteile werden nachfolgend anhand der Figuren 1 bis 12 näher erläutert.

Es zeigen:
- Figur 1: einen teilweisen Axialschnitt durch ein erstes Ausführungsbeispiel einer vollständigen Video-Kameraanordnung mit einer Dome-Kamera, einer Platinenanordnung und einem Schutzgehäuse,
- Figur 2: eine Explosionsdarstellung des Gegenstandes nach Figur 1 mit angehobenem Schutzdach und abgenommenem Schutzgehäuse,
- Figur 3: das abgenommene Schutzgehäuse nach Figur 1,
- Figur 4: einen verkleinerten Axialschnitt durch den Tragflansch mit Anbauteilen,
- Figur 5: eine Unteransicht des Gegenstandes nach Figur 4,
- Figur 6: eine Unteransicht des Heizelements in den Figuren 4 und 5,
- Figur 7: eine Unteransicht einer weiteren Anschlußplatine in den Figuren 4 und 5,
- Figur 8: eine axial geschnittene Baugruppe aus dem Tragflansch und der Zwischenplatte,
- Figur 9: eine Draufsicht auf die Zwischenplatte nach Figur 8,
- Figur 10: eine axial geschnittene abnehmbare Baugruppe aus der Zwischenplatte und der Tragplatte mit dem Netztransformator und einer weiteren Anschlußplatine,
- Figur 11: eine Draufsicht auf die Tragpaltte nach Figur 10, und
- Figur 12: einen teilweisen Axialschnitt durch ein zweites Ausführungsbeispiel einer vollständigen Video-Kameraanordnung mit einer Dome-Kamera, einer Platinenanordnung und einem Schutzgehäuse, analog Figur 1.

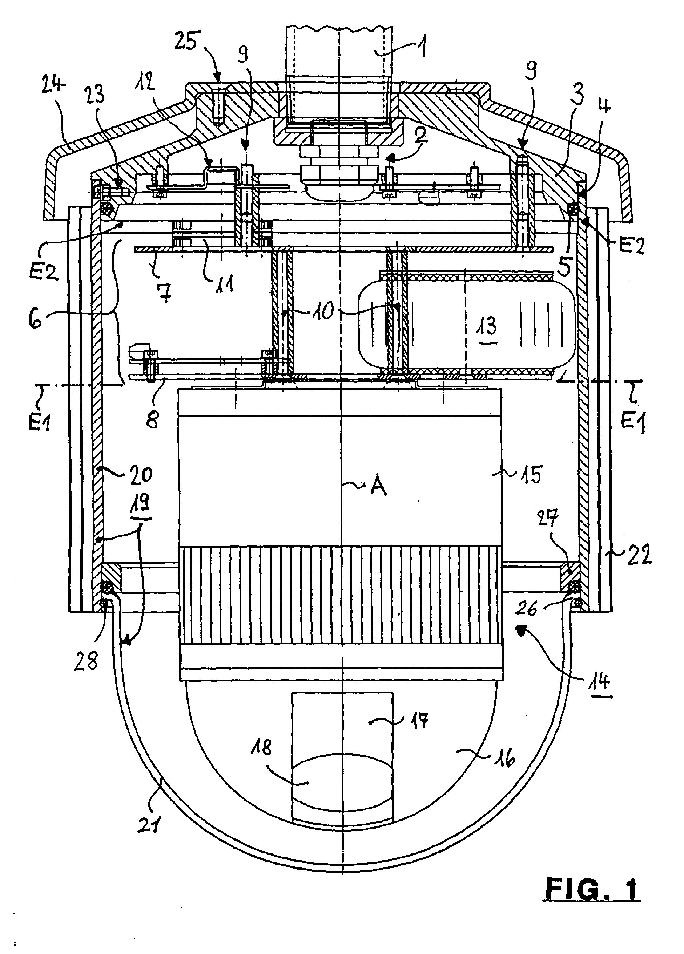

In Figur 1 ist das untere Ende eines Halterohres 1 dargestellt, durch das sämtliche elektrischen Leitungen für die Spannungsversorgung, die Steuerung und die Video-Signale hindurchgeführt sind und das in seinem weiteren Verlauf entweder geradlinig, z.B. für eine Deckenbefestigung, oder gekrümmt, z.B. für eine Wandbefestigung, verlaufen kann. Auch ist die Anbringung an beliebigen anderen Halteflächen oder Haltevorrichtungen eingeschlossen. Zur Kabeldurchführung dient eine PG-Verschraubung 2 (Panzer-Gewinde-Verschraubung).

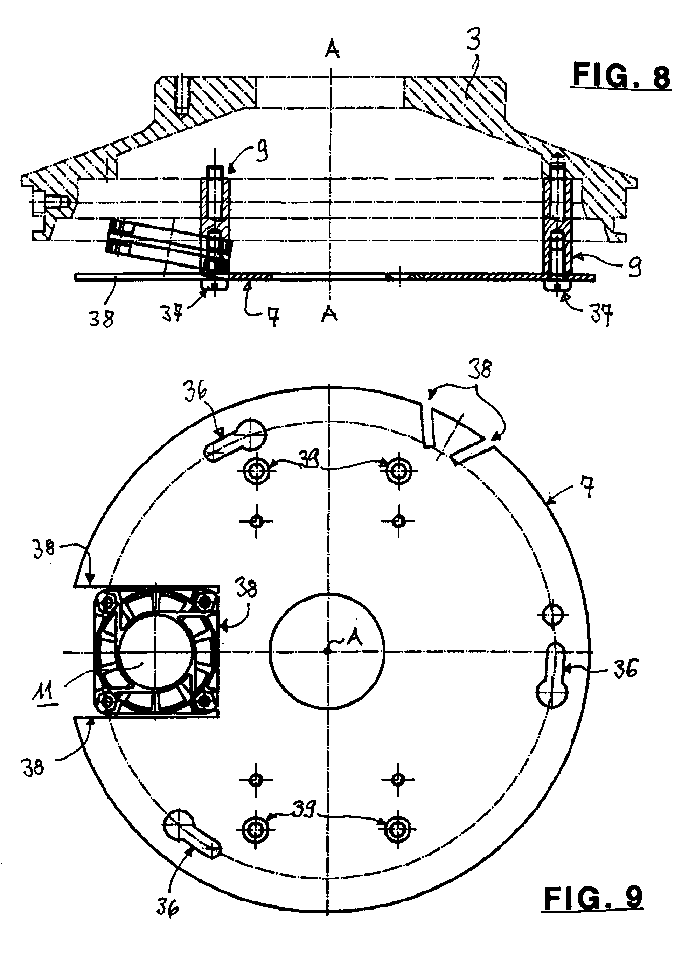

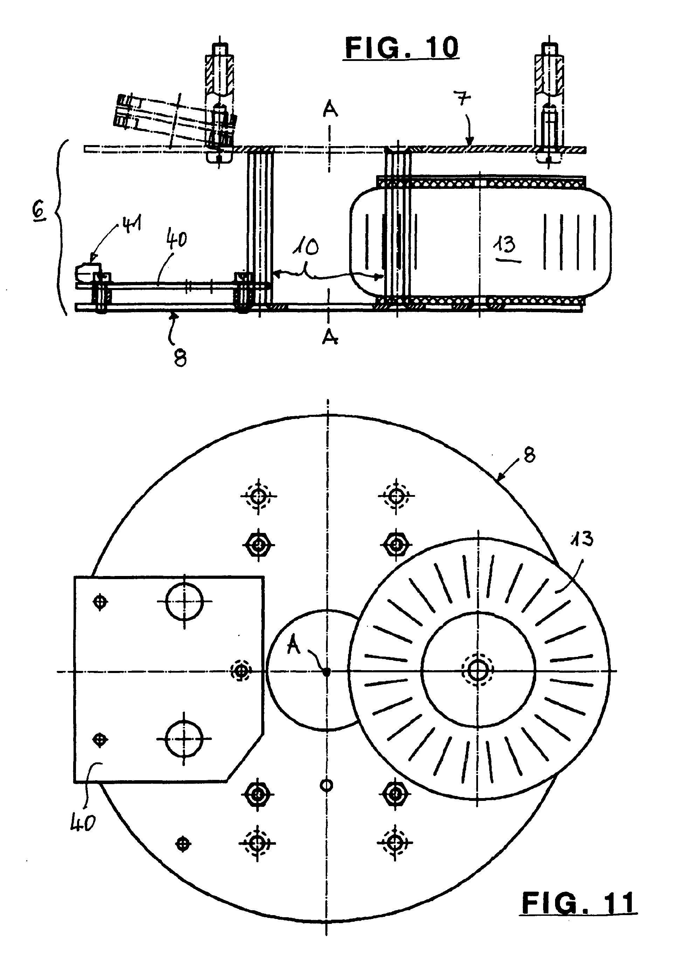

Das Halterohr 1 trägt an seinem unteren Ende einen Tragflansch 3 mit einer äußeren Zylinderfläche 4, die durch eine Nut mit einem Dichtring 5 unterbrochen ist. An dem Tragflansch 3 ist eine Platinenanordnung 6 befestigt, die in diesem Fall aus einer oberen Zwischenplatte 7 (nach den Figuren 8 und 9) und einer unteren Tragplatte 8 (nach den Figuren 10 und 11) besteht. Die Zahl der Platten ist nicht kritisch; es kann auch nur eine Platte oder es können auch mehr als zwei Platten eingesetzt werden. Die Platinenanordnung 6 wird durch mehrere, auf den Umfang verteilte Distanzelemente 9 mit entsprechenden Verschraubungen (siehe Figur 8) getragen. Die untere Tragplatte 8 ist an der oberen Zwischenplatte 7 gleichfalls durch mehrere, auf den Umfang verteilte Distanzelemente 10 mit entsprechenden Verschraubungen gehalten (siehe auch Figur 10). Die Distanzelemente 10 können - wie gezeichnet - als Distanzbolzen oder beispielsweise auch als abgekröpfte Blechwinkel ausgebildet sein.

über der oberen Zwischenplatte 7 sind ein Gebläse 11 und ein Heizelement 12 angeordnet, mit denen in einer kälteren Umgebung eine Beheizung zur Vermeidung von Wasserdampfkondensationen ermöglicht wird. Zwischen den Platten 7 und 8 ist ein Netztransformator 13 angeordnet. Die Vielzahl der für die elektrischen Anschlüsse erforderlichen Anschlußkontakte ist der Einfachheit halber nicht dargestellt; sie ergibt sich aus der Funktion und der räumlichen Verteilung der elektrischen Bauelemente. In der Regel werden mindestens 6 Anschlußkontakte einschließlich der Kontakte für das Video-Signal benötigt.

An der Unterseite der Tragplatte 8 ist eine handelsübliche Dome-Kamera 14 befestigt, wie sie von unterschiedlichen Herstellern in ähnlichen Bauformen geliefert wird. Zu einer solchen Dome-Kamera gehören ein Gehäuse 15 für die Aufnahme einer Vielzahl elektronischer Bauteile und Schaltungen. Dazu können auch zwei elektrische Antriebsmotoren für die ferngesteuerte Drehung einer Video-Kamera um eine vertikale Achse A und für das Verschwenken der optischen Achse dieser Video-Kamera um eine zweite, horizontale Achse in einer vertikalen Ebene gehören, in der auch die Achse A liegt. Der horizontale Drehwinkel der Kamera kann mehr als 360 ° betragen, der vertikale Schwenkwinkel bis zu 100 °, wobei die - ferngesteuerte - Stellgeschwindigkeit so groß ist, daß diese Winkel in weniger als einer Sekunde durchlaufen werden können. Bei der automatischen Verfolgung eines beweglichen Ziels kann diese Stellgeschwindigkeit auch wesentlich niedriger sein. Selbstverständlich schließt die Erfindung auch Dome-Kameras ein, bei denen die optische Achse des Objektivs zusammen mit der Kamera manuell fest eingestellt werden kann.

Mit der optischen Achse der Video-Kamera können durch überlagerte Bewegungen praktische alle Raumkoordinaten unterhalb einer Ebene, in der der Gehäuserand liegt, kontinuierlich eingestellt und/oder abgefahren werden.

Das Gehäuse 15 ist nach unten hin durch eine Kuppel 16 abgeschlossen, die im internationalen Sprachgebrauch auch als als "Dome" bezeichnet wird. In dieser Kuppel 16 befindet sich ein sektorförmiges Sichtfenster 17, hinter dem ein Objektiv 18 einer sonst nicht näher gezeigten Video-Kamera angeordnet ist. Die Kuppel 16, die die Form einer hohlen Halbkugel hat, besteht entweder ganz oder teilweise aus einem für sichtbares Licht und/oder Infrarotstrahlung durchlässigen Werkstoff, der auch farblich getönt und/oder verspiegelt sein kann. Bei dem Objektiv 18 kann es sich um ein Autofokusobjektiv, um ein Objektiv mit einer Festbrennweite mit oder ohne Autofokuseinrichtung und/oder um ein fernsteuerbares Zoom-Objektiv handeln. Durch Zusatzfunktionen kann sich die Zahl der Anschlußkontakte nochmals erhöhen. Weitere Ausführungen hierzu dürften sich erübrigen, da solche Kamera-Systeme, die auch als Dome-Kameras bezeichnet werden, konfektioniert im Handel sind. Die Kuppel 16 kann auch aus einem undurchsichtigen Werkstoff bestehen, in dem das Sichtfenster 17 ausgespart ist, wobei in diesem Fall im Sichtfenster 17 ein durchsichtiger Werkstoff in Form eines passenden Sektors einer Kugelschale angeordnet sein kann.

Von Bedeutung für die nachfolgenden Definitionen ist hier eine erste Trenneben E1-E1 zwischen der oberen Stirnseite des Gehäuses 15 und der Unterseite der unteren Tragplatte 8. Von Bedeutung ist ferner, daß für diese Verbindung weder eine teure Bajonett-Verbindung noch eine geführte Steckverbindung mit räumlich genau zugeordneten Kontakten benötigt wird, wie dies von Foto-Kameras und auch von Dome-Kameras her bekannt ist, für die allerdings kompatible Schutzgehäuse benötigt werden. Eine einfache Verschraubung und/oder eine Steckverbindung und/oder eine Lötverbindung genügt bzw. genügen beim Erfindungsgegenstand.

An den Tragflansch 3 schließt sich nach unten hin ein Schutzgehäuse 19 an, das aus einem oberen hohlzylindrischen Gehäusemantel 20 und einer unten angesetzten zweiten Kuppel 21 besteht, die zu der ersten Kuppel 16 zumindest im wesentlichen konzentrisch angeordnet ist. Die Kuppel 21, die gleichfalls die Form einer hohlen Halbkugel hat, besteht aus einem für sichbares Licht und/oder Infrarotstrahlung durchlässigen Werkstoff, der auch farblich getönt und/oder verspiegelt sein kann. Auf seiner Außenseite ist der Gehäusemantel 20 von einem weiteren Mantel 22 umgeben, der aus wärmedämmendem und/oder reflektierendem Material besteht, aber nicht zwingend erforderlich ist.

Zwischen der Oberkante des Gehäusemantels 20 und dem äußeren Rand des Tragflansches 3 wird eine weitere Trennebene E2-E2 gebildet, d.h., nach dem Lösen mehrerer auf den Umfang verteilter Schrauben 23 kann das Schutzgehäuse 19 komplett nach unten abgezogen werden. über der bisher beschriebenen Anordnung ist ein Schutzdach 24 angeordnet, das nach Lösen von Schrauben 25 nach oben angehoben werden kann. Dadurch werden auch die Schrauben 23 von der Seite her zugänglich. Alternativ können zwecks Vermeidung einer Demontage des Schutzdaches 24 auch Aussparungen in dessen Rand an den Stellen der Schrauben 23 vorgesehen sein.

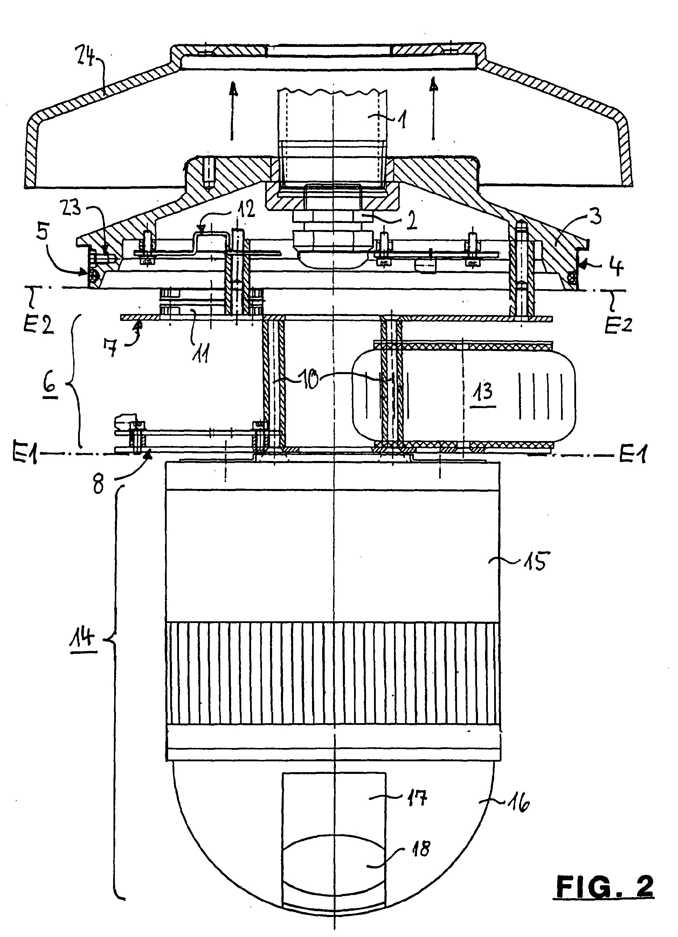

Dieser Zustand ist in Figur 2 dargestellt. Dadurch, daß die Trennebene E2-E2 über der Trennebene E1-E1 liegt, werden die Räume über der Platte 7 und zwischen den Platten 7 und 8 von der Seite und von schräg unten her für Werkzeugeingriffe zugänglich, so daß die mechanischen und elektrischen Anschlüsse und Verdrahtungen sowie Messungen bei der Montage ohne weiteres ausgeführt werden können.

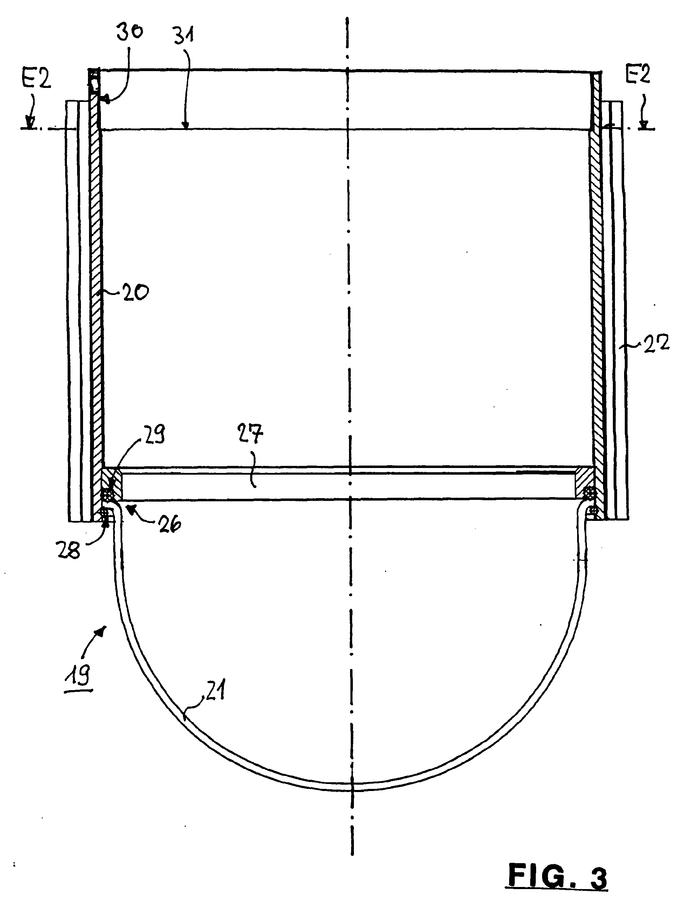

Figur 3 zeigt das Schutzgehäuse 19 als abgenommene Baugruppe. Am unteren Rand des Gehäusemantels 20 ist die zweite oder äußere Kuppel 21 auswechselbar mittels eines nach außen umgelegten Randes 26 zwischen einem eingeklebten, eingeschweißten oder angeformten Ring 27 und einem Sprengring 28 gehalten. Für die Abdichtung ist ein Rundschnurring 29 vorgesehen. Am oberen Rand ist der Gehäusemantel 20 mit einer Durchmesservergrößerung 30 und einer Stufe 31 versehen, so daß das Schutzgehäuse 19 räumlich definiert auf die Zylinderfläche 4 des Tragflansches 3 aufgeschoben werden kann. Nach dem Zusammenbau der Teile nach den Figuren 2 und 3 ergibt sich wieder der Zustand nach Figur 1.

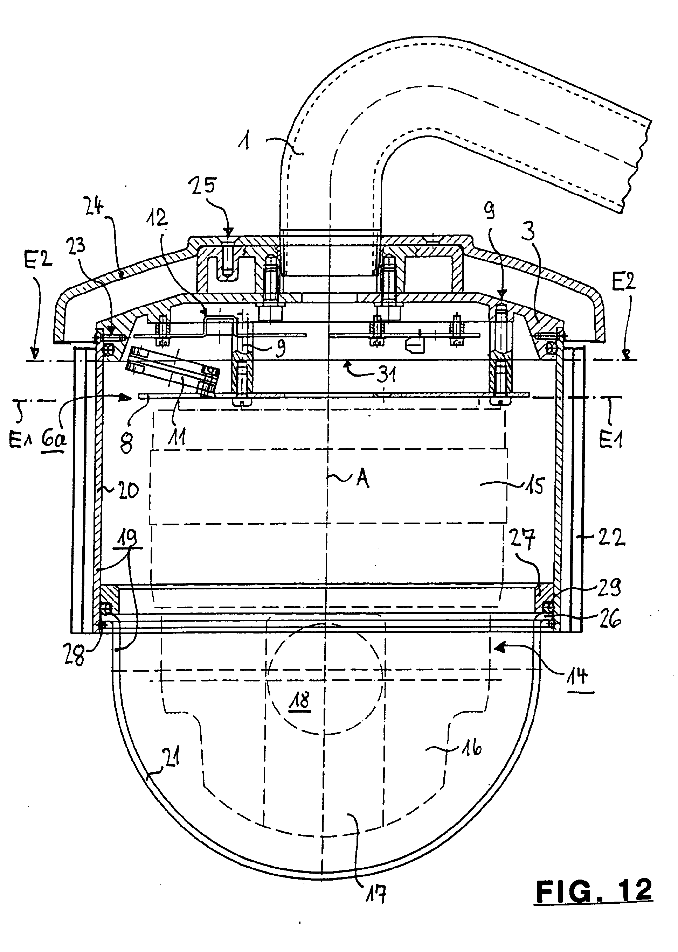

Von Bedeutung ist hierbei folgendes: Die Kuppeln 16 und 21 (ob mit oder ohne das spezielle Sichtfenster 17) sollen zumindest weitgehend konzentrisch zueinander und zu dem Schwenk- und Drehpunkt der Video--Kamera bzw. ihrer optischen Achse angeordnet sein, um optische Verzeichnungen geringstmöglich zu halten. Dies setzt eine definierte Länge des Gehäusemantels 20 voraus. So kann es beispielsweise bei der Umrüstung einer Anordnung nach Figur 1 zu derjenigen nach Figur 12 oder umgekehrt erforderlich sein, den Gehäusemantel 20 durch einen kürzen oder längeren Rohrabschnitt zu ersetzen oder von dem Rohrabschnitt eine Teillänge abzuschneiden. Die Trennbarkeit von Gehäusemantel 20 und Kuppel 21 ist hierfür und für einen Ersatz einer schadhaften Kuppel eine wesentliche Vorausetzung. Alternativ ist eine Anpassung allerdings auch durch Änderung der Länge der Distanzelemente 9 und/oder 10 möglich.

Auch sind die Ausdrücke "Teil- und Halbkugelschale" für die Kuppel 16 und/oder 21 nicht notwendigerweise eine einschränkende geometrische Beschreibung. Die Teilkugelschalen können sehr wohl auch in Zylinderabschnitte gleichen Durchmessers wie der des virtuellen Randes übergehen, wie dies in den Figuren 1, 3 und 12 gezeigt ist. Wesentlich ist - auch in verbindung mit der Länge des Gehäusemantels 20 - daß der untere Rand undurchsichtiger Teile nicht so weit nach unten ragt, daß der Dreh- und Schwenkbereich des Objektivs 18 einschließlich von dessen Blickwinkel unzulässig abgeschattet wird.

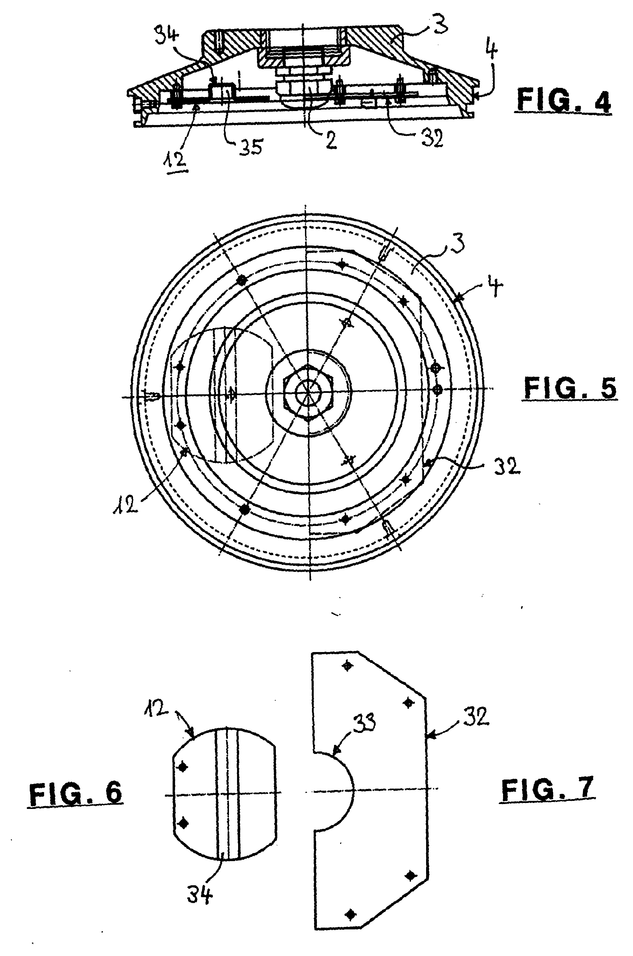

Gemäß den Figuren 4 bis 7 sind an den Tragflansch 3 von unten das Heizelement 12 und eine trapezförmige Verteilerplatine 32 mit einem halbkreisförmigen Ausschnitt 33 angeschraubt (in Figur 5 gestrichelt dargestellt). Das Heizelement 12 ist in der Draufsicht als Kreisscheibensegment ausgebildet und trägt in der Mitte eine Sicke 34, in der ein stabförmiger Heizkörper 35 untergebracht ist (Figur 4). Die Anschlüsse sind der Einfachheit halber fortgelassen. Durch die Anordnung oberhalb des Gebläses 11 (Figuren 1, 2 und 12) wird das Heizlelement durch die umgewälzte Luft angeblasen, die dadurch aufgeheizt wird.

In den Figuren 8 und 9 ist die kreisscheibenförmige Zwischenplatte 7 dargestellt, die über die Distanzelemente 9 mit dem Tragflansch 3 verschraubt ist (Figuren 1 und 2). Gemäß Figur 9 geschieht dies über schlüssellochförmige Ausnehmungen 36, die über die Schraubenköpfe 37 (Figur 8) geschoben werden können. Nach dem Verdrehen der Zwischenplatte 7 kann diese durch die Schraubenköpfe 37 festgezogen werden. Am Rande der Zwischenplatte 7 befinden sich benachbarte spaltförmige Ausnehmungen 38 für das Einhängen einer Fangvorrichtung, z.B. einer Seilschlaufe, durch die alle demontierbaren Teile an einem Herunterfallen gehindert werden. Das Gebläse 11 ist über einer etwa quadratischen Ausnehmung 38 befestigt. Angesenkte Schraublöcher 39 dienen zur Befestigung der Tragplatte 8 nach den Figuren 10 und 11.

Gemäß den Figuren 10 und 11 ist auf der Tragplate 8 außer dem Netztransformator 13 eine weitere Leiterplatte 40 befestigt, die weitere Anschlußelemente 41 trägt, von den in Figur 10 eines links außen dargestellt ist. Es ergibt sich aus einer Zusammenschau der Figuren 8 bis 11, daß die gesamte Platinenanordnung 6 durch Lösen der Schraubenköpfe 37 und Verdrehen der Platinenanordnung 6 mit oder ohne Dome-Kamera 14 nach unten abgenommen werden kann sowie dies flexible Anschlußdrähte zulassen, wodurch die Zugänglichkeit der Platinenanordnung 6 - auch von oben her - weiter verbessert wird.

In Figur 12 sind gleiche Teile oder Teile mit gleicher Funktion mit gleichen Bezugszeichen versehen. Die Platinenanordnung 6a enthält in diesem Falle nur eine einzige Tragplatte 8 für die Halterung der Dome-Kamera 14, die nur gestrichelt angedeutet ist und von einem anderen Hersteller stammt. In diesem Fall ist kein Netztransformator vorhanden, weil das Gerät mit Kleinspannung versorgt wird, so daß der Gehäusemantel 20 des Schutzgehäuses 19 kürzer gestaltet ist. Auch in diesem Falle liegt die Trennebene E2-E2 über der Trennebene E1-E1, so daß nach dem Abnehmen des Schutzgehäuses 19 der Raum oberhalb der Tragplatte 8 von der Seite und von schräg unten her für das Einführen von Werkzeugen für das Herstellen und Lösen von mechanischen und elektrischen Anschlüssen zugänglich ist. Ansonsten besteht weitgehende übereinstimmung mit dem Gegenstand der Figuren 1 bis 3. Die Bauweise nach den Figuren 4 bis 11 läßt sich ohne weiteres auch auf die Bauweise nach Figur 12 übertragen, wobei die Zwischenplatte 7 weggelassen wird und die Tragplatte 8 deren Funktion für die Befestigung der Dome-Kamera 14 übernimmt.

Es ist aus allen Figuren ersichtlich, daß die gesamte Anordnung im wesentlichen Rotationssymmetrisch zur Achse A-A ausgebildet ist, daß der Außendurchmesser des Schutzgehäuses 19 im Verhältnis zum Außendurchmesser der Dome-Kamera 14 kleinstmöglich ist und daß es keiner Manipulationen innerhalb des Ringspaltes zwischen der Dome-Kamera 14 und dem Schutzgehäuse 19 bedarf, um mechanische und/oder elektrische Verbindungen herzustellen oder zu lösen.

Die Dome-Kamera 14 ist handelsüblich eine Einheit aus der inneren Kuppel 16 (mit oder ohne Schlitz), der Video-Kamera selbst und dem angesetzten Gehäuse 15.

### Bezugszeichenliste:

- 1: Halterohr
- 2: PG-Verschraubung
- 3: Tragflansch
- 4: Zylinderfläche
- 5: Dichtring
- 6: Platinenanordnung
- 6a: Platinenanordnung
- 7: Zwischenplatte
- 8: Tragplatte
- 9: Distanzelemente
- 10: Distanzelemente
- 11: Gebläse
- 12: Heizelement
- 13: Netztransformator
- 14: Dome-Kamera
- 15: Gehäuse
- 16: Kuppel
- 17: Sichtfenster
- 18: Objektiv
- 19: Schutzgehäuse
- 20: Gehäusemantel
- 21: Kuppel
- 22: Mantel
- 23: Schrauben
- 24: Schutzdach
- 25: Schrauben
- 26: Rand
- 27: Ring
- 28: Sprengring
- 29: Rund schnurring
- 30: Durchmesserverg rößerung
- 31: Stufe
- 32: Verteilerplatine
- 33: Ausschnitt
- 34: Sicke
- 35: Heizkörper
- 36: Ausnehmungen
- 37: Schraubenköpfe
- 38: Ausnehmungen
- 39: Schraublöcher
- 40: Leiterplatte
- 41: Anschlußelemente

- A-A: Drehachse
- E1-E1: Trennebene
- E2-E2: Trennebene

## Patentansprüche

1. Video-überwachungsgerät mit
a) einer Dome-Kamera (14) mit einem Gehäuse (15) und einer mindestens teilweise strahlungsdurchlässigen ersten Kuppel (16), in der eine Video-Kamera mit einem Objektiv (18) angeordnet ist, dessen optische Achse um eine vertikale Drehachse (A-A) und eine horizontale Schwenkachse verstellbar ist, mit
b) einer Platinenanordnung (6, 6a) mit elektrischen Bauteilen und einer Halterung für die Dome-Kamera (14), wobei zwischen der Platinenanordnung (6, 6a) und der Dome-Kamera (14) eine erste Trennebene (E1-E1) angeordnet ist, und mit
c) einem Schutzgehäuse (19), das die Platinenanordnung (6, 6a) und die Dome-Kamera (14) umgibt und das im Bereich der ersten Kuppel (16) eine zweite strahlungsdurchlässige Kuppel (21) besitzt,
**dadurch gekennzeichnet, daß**
d) die Platinenanordnung (6, 6a) an der Unterseite eines Tragflansches (3) und zumindest im wesentlichen unterhalb von dessen Außenrand angeordnet ist,
e) die zweite Kuppel (21) in Richtung der Drehachse (A-A) nach oben durch einen Gehäusemantel (20) verlängert ist, der die Platinenanordnung (6, 6a) umgreift und einen oberen Rand aufweist, der lösbar mit dem Tragflansch (3) verbunden ist, wobei an der Verbindungsstelle eine zweite Trennebene (E2-E2) gebildet ist, die oberhalb der ersten Trennebene (E1-E1) liegt.

2. Video-überwachungsgerät nach Anspruch 1, **dadurch gekennzeichnet, daß** im Gehäuse (15) ein Drehantrieb und ein Schwenkantrieb für die ferngesteuerte Bewegung der optischen Achse des Objektivs (18) angeordnet sind.

3. Video-überwachungsgerät nach Anspruch 1, **dadurch gekennzeichnet, daß** der Tragflansch (3) eine koaxiale Fläche (4) aufweist, auf die der obere Rand des Gehäusemantels (20) aufsetzbar ist.

4. Video-überwachungsgerät nach Anspruch 1, **dadurch gekennzeich**net, daß der Tragflansch (3) im wesentlichen scheibenförmig ausgebildet ist und ein Halterohr (1) mit dem Gehäusemantel (20) des Schutzgehäuses (19) verbindet.

5. Video-überwachungsgerät nach Anspruch 1, **dadurch gekennzeichnet, daß** an der Unterseite des Tragflansches (3) über mindestens einen Satz von Distanzelementen (9, 10) mindestens eine Tragplatte (8) angeordnet ist, an der die Dome-Kamera (14) befestigt ist, wobei die erste Trennebene (E1-E1) zwischen der Tragplatte (8) und der Dome-Kamera (14) angeordnet ist.

6. Video-überwachungsgerät nach Anspruch 5, **dadurch gekennzeichnet, daß** zwischen dem Tragflansch (3) und der Tragplatte (8) eine Zwischenplatte (7) angeordnet ist, wobei die Zwischenplatte (7) über einen ersten Satz von Distanzelementen (9) mit dem Tragflansch (3) und die Tragplatte (8) über einen zweiten Satz von Distanzelementen (10) mit der Zwischenplatte (7) verbunden ist.

7. Video-überwachungsgerät nach einem der Ansprüche 5 und 6, **dadurch gekennzeichnet, daß** die Platinenanordnung (6, 6a) als Baugruppe abnehmbar am Tragflansch (3) befestigt ist.

8. Video-überwachungsgerät nach Anspruch 7, **dadurch gekennzeichnet, daß** die Platinenanordnung (6, 6a) mittels schlüssellochförmiger Ausnehmungen (36) an den Distanzelementen (9) des Tragflansches befestigt ist.

9. Video-überwachungsgerät nach Anspruch 6, **dadurch gekennzeichnet, daß** an dem Tragflansch (3) ein Heizelement (12) und an der Zwischenplatte (7) ein Gebläse (11) für die Umwälzung der aufgeheizten Innenatmosphäre des Schutzgehäuses (19) angeordnet ist.

10. Video-überwachungsgerät nach Anspruch 5, **dadurch gekennzeichnet, daß** an dem Tragflansch (3) ein Heizelement (12) und an der Tragplatte (8) ein Gebläse (11) für die Umwälzung der aufgeheizten Innenatmosphäre des Schutzgehäuses (19) angeordnet ist.

11. Video-überwachungsgerät nach Anspruch 1, **dadurch gekennzeichnet, daß** der Gehäusemantel (20) an seiner Unterseite einen Ring (27) besitzt und daß die zweite Kuppel (21) einen nach außen umgelegten Rand (26) besitzt, der unter Zwischenschaltung einer Dichtung (29) durch einen Sprengring (28) gegen den Ring (27) festgelegt ist.

12. Video-überwachungsgerät nach Anspruch 1, **dadurch gekennzeichnet, daß** der Gehäusemantel (20) von einem weiteren Mantel (22) umgeben ist.

13. Video-überwachungsgerät nach Anspruch 1, **dadurch gekennzeichnet, daß** über dem Tragflansch (3) ein nach oben abnehmbares Schutzdach (24) angeordnet ist, dessen Außenrand den oberen Rand des Schutzgehäuses (19) übergreift.

14. Video-überwachungsgerät nach Anspruch 1, **dadurch gekennzeichnet, daß** der Gehäusemantel (20) des Schutzgehäuses (19) als Hohlzylinder ausgebildet ist.

15. Video-überwachungsgerät nach Anspruch 14, **dadurch gekennzeichnet, daß** die Länge des Gehäusemantels (20) mindestens das 0,5-Fache seines Außendurchmessers beträgt.

16. Video-überwachungsgerät nach Anspruch 15, **dadurch gekennzeichnet, daß** die Länge des Gehäusemantels (20) mindestens das 0,8-Fache seines Außendurchmessers beträgt.

17. Video-überwachungsgerät nach Anspruch 1, **dadurch gekennzeichnet, daß** die äußere Kuppel (21) aus einer Teilkugelschale besteht, von deren Rand in Richtung auf den Gehäusemantel (20) ein hohlzylindrischer Fortsatz gleichen Durchmessers wie der des Randes ausgeht.

18. Video-überwachungsgerät nach Anspruch 17, **dadurch gekennzeichnet, daß** die äußere Kuppel (21) aus einer Halbkugelschale und aus einem hohlzylindrischen Fortsatz gleichen Durchmessers besteht.
